# EUROPEAN PATENT SPECIFICATION

(11) **EP 3 700 302 B1**
(45) Date of publication and mention of the grant of the patent: **03.09.2025**
(21) Application number: 18869072.1
(22) Date of filing: 12.09.2018
(51) Int. Cl.: H05B 6/14, D01D 5/16, D02J 1/22, F16C 13/00, D01D 10/02, D02J 13/00, F16C 41/00

(54) **INDUCTION HEATING ROLLER AND SPUN YARN DRAWING DEVICE**
INDUKTIONSHEIZWALZE UND SPINNFADENZIEHVORRICHTUNG
ROULEAU DE CHAUFFAGE PAR INDUCTION ET DISPOSITIF D'ÉTIRAGE DE FILÉ

(30) Priority: 17.10.2017 JP 2017200810; 23.02.2018 JP 2018030816
(43) Date of publication of application: 26.08.2020
(73) Proprietor: TMT Machinery, Inc., Osaka-shi, Osaka 541-0041 (JP)
(72) Inventor: KAGATA, Kakeru, Kyoto-shi, Kyoto 612-8686 (JP); MORINAGA, Ryo, Kyoto-shi, Kyoto 612-8686 (JP)
(74) Representative: Hoffmann Eitle
(86) International application number: PCT/JP2018/033795
(87) International publication number: WO 2019/077914

(56) References cited:
- JP-A- 2018 035 488
- JP-A- H09 127 810
- JP-A- S54 157 354
- JP-U- S60 136 375
- US-A- 4 208 560
- US-A- 5 768 673
- US-A1- 2013 306 625

## Description

### Technical Field

The present invention relates to an induction heating roller and a spun yarn drawing device including one or more induction heating rollers.

### Background Art

Japanese Unexamined Patent Publication No. H11(1999)-251052 discloses an induction heating roller configured to heat yarns. The induction heating roller includes: a hollow roller main body; and a coil provided radially inward of the roller main body. As an alternating current flows through the coil, eddy currents are induced in the roller main body due to electromagnetic induction, and the roller main body is heated by Joule heating (that is, heat is generated in the roller main body by induction heating). The induction heating roller is supported in a cantilever manner so that yarns can be easily wound onto the roller.

Induction heating rollers each generally has difficulty in obtaining equal distribution of the surface temperature of the roller main body in its axial direction because heat generation therein is less likely to be equal in the axial direction and because heat is more likely to be dissipated at axial end portions of the roller main body to the outside. To deal with this, an induction heating roller described in Japanese Unexamined Patent Publication No. 2003-100437includes a jacket chamber filled with a heating medium in a gas-liquid two-phase state, and the jacket chamber is provided in a roller main body so as to extend in an axial direction of the roller. As the jacket chamber functions as a heat pipe, the inequality in the distribution of the surface temperature of the roller main body in the axial direction is improved.

Other examples of the prior art can be seen in documents US 2013/306625 A1, US 5 768 673 A and US 4 208 560 A.

### Summary of Invention

### Technical Problem

To provide such a jacket chamber in a roller main body, however, it is necessary to increase the thickness of the roller main body in its radial direction. This increases the heat capacity of the roller main body, which worsens the heating efficiency of the roller main body. In view of the above, the present inventors conceived an idea of providing a cylindrical heat equalizing member having a heat conductivity higher than that of the roller main body, in contact with an inner circumferential surface of the roller main body. This facilitates equalization in the distribution of the surface temperature of the roller main body because the heat equalizing member functions as a heat pipe. Furthermore, it is possible to efficiently heat the roller main body because the thickness of the roller main body is smaller and therefore the increase in the heat capacity is smaller.

Now, reference is made to a case in which the heat equalizing member is applied to an induction heating roller supported in a cantilever manner, as described in Japanese Unexamined Patent Publication No. H11(1999)-251052. In this case, the heat equalizing member is inserted into a space radially inside the roller main body through an opening of the roller main body, which is provided at its base-end-side portion in the axial direction ("axial base end portion"). Furthermore, a ring-like fixing member (hereinafter referred to as a "fixing ring") for fixing the roller main body and the heat equalizing member to each other is attached to the axial base end portion of the roller main body, for example. The fixing ring is arranged to extend further radially inward relative to the heat equalizing member in order to firmly fix the heat equalizing member provided radially inward of the roller main body.

As described above, at the axial end portions of the roller main body, it is more likely that heat is dissipated to the outside to cause a surface temperature drop. In view of the above, the present inventors used carbon steel, which is a ferromagnetic material, as a material of the fixing ring, based on the following grounds: the present inventors used such a fixing ring in order to improve the distribution of the surface temperature of the roller main body by facilitating the flow of magnetic flux through the fixing ring to facilitate the generation of eddy currents, thereby to increase the amount of heat generation at the base end portion of the roller main body. However, when this configuration was actually tested with a heater turned on, excessive heat was generated in the fixing ring and the temperature at the base end portion of the roller main body rose higher than that of its axially central portion, disadvantageously. That is, the present inventors found that: in the above configuration, magnetic flux excessively passed through the fixing ring extending further radially inward (toward the coil) relative to the roller main body, to induce eddy currents excessively, and therefore excessive heat was generated in the fixing ring.

An object of the present invention is to mitigate heat generation in a fixing ring provided to an induction heating roller.

### Solution to Problem

In a first aspect of the present invention, an induction heating roller includes: a rotatable roller unit; and a heater including a coil provided radially inward of the roller unit. The roller unit includes: a roller main body including a cylindrical heating target configured to be heated by induction heating due to magnetic flux passing in an axial direction of the roller unit, the magnetic flux being generated by electric current flowing through the coil; a heat equalizing unit including a heat equalizing member which is in contact with an inner circumferential surface of the heating target, the heat equalizing member extending in the axial direction, and having a heat conductivity higher at least than that of the inner circumferential surface of the heating target; a fixing ring provided so as to be in contact with a first-side end portion of the heating target which is on a first side in the axial direction and with a first-side end portion of the heat equalizing unit which is on the first side in the axial direction, the fixing ring fixing the roller main body and the heat equalizing unit to each other; and a first magnetic member provided between the heating target and the coil in the radial direction, the first magnetic member being provided on the first side relative to a center of the heating target in the axial direction and on a second side opposite to the first side relative to the fixing ring in the axial direction.

In this aspect of the present invention, the fixing ring is provided so as to be in contact with the first-side end portion of the heating target and with the first-side end portion of the heat equalizing unit in the axial direction of the roller unit (hereinafter, simply referred to as an "axial direction"), and the fixing ring fixes the roller main body and the heat equalizing unit to each other. At least a part of the fixing ring is, in general, positioned closer to the coil than the heating target and the heat equalizing unit in the radial direction. Magnetic flux tends to, in nature, concentratedly flow into the shortest path, through which magnetic flux readily passes, among paths for magnetic flux, and therefore in the above configuration, magnetic flux is more likely to flow into the fixing ring. This increases the possibility that heat is generated in the fixing ring due to induction heating.

To deal with this, in the above aspect of the present invention, the first magnetic member is provided radially inward of the heating target, and is provided on the first side relative to the axial center of the heating target in the axial direction and on the second side relative to the fixing ring in the axial direction. Thus, appropriately disposing the first magnetic member makes it possible to form a new path through which magnetic flux more readily passes than a path extending via the fixing ring. Due to this, as compared to the case in which no first magnetic member is provided, the amount of magnetic flux passing through the fixing ring can be reduced, leading to reduction of eddy currents generated in the fixing ring. Accordingly, it is possible to mitigate heat generation in the fixing ring provided to the induction heating roller.

In a second aspect of the invention, the induction heating roller of the first aspect is arranged such that the heat equalizing member has a relative permeability lower than that of the fixing ring.

In the above configuration in which the heat equalizing member has the lower relative permeability, magnetic flux is less likely to pass through the heat equalizing member, and this increases the likelihood that the magnetic flux concentratedly flows into the fixing ring. Even in this configuration, because the new path through which magnetic flux readily passes is created by the first magnetic member in the above aspect, it is possible to effectively decrease the amount of magnetic flux passing through the fixing ring.

In a third aspect of the invention, the induction heating roller of the first or second aspect is arranged such that the first magnetic member is provided so as to correspond to a whole circumference of the fixing ring in a circumferential direction of the fixing ring.

In this aspect, the inflow of magnetic flux into the fixing ring is further reduced as compared to the case in which the first magnetic member is provided only partially with respect to the circumferential direction of the fixing ring.

In a fourth aspect of the invention, the induction heating roller of any of the first to third aspects is arranged such that the first magnetic member is in contact with the inner circumferential surface of the heating target.

If the flow of magnetic flux is disturbed between the first magnetic member and the heating target, there is a possibility that the magnetic flux detours to flow into the fixing ring. As compared to the case in which the first magnetic member is not in contact with the heating target (i.e., the case in which there is a gap between the first magnetic member and the heating target), the above arrangement facilitates the flow of magnetic flux between the first magnetic member and the heating target, and therefore it is possible to reduce the amount of magnetic flux detouring to flow into the fixing ring.

In a fifth aspect of the invention, the induction heating roller of any of the first to fourth aspects is arranged such that the first magnetic member is in contact with the heat equalizing member.

As magnetic flux passes through the first magnetic member, the first magnetic member is also heated by induction heating. Because the first magnetic member is in contact with the heat equalizing member in this aspect, heat generated in the first magnetic member is transmitted to the heating target via the heat equalizing member. This makes it possible to efficiently heat the heating target.

In a sixth aspect of the invention, the induction heating roller of any of the first to fifth aspects is arranged such that there is a gap between the first magnetic member and the fixing ring in the axial direction.

In the above aspect, as compared to the case in which there is no gap between the first magnetic member and the fixing ring (i.e., the case in which the first magnetic member is in contact with the fixing ring), it is possible to reduce the transmission of heat, generated by eddy currents flowing in the first magnetic member, toward the fixing ring. This makes a temperature rise in the fixing ring smaller. Furthermore, due to the presence of the gap, magnetic flux is less likely to flow toward the fixing ring.

In a seventh aspect of the invention, the induction heating roller of any of the first to sixth aspects is arranged such that the first magnetic member is a pressing member provided side by side on the first side of the heat equalizing member in the axial direction and configured to press the heat equalizing member; and the heat equalizing unit further comprises a biasing member provided between the pressing member and the fixing ring in the axial direction and configured to bias the pressing member toward the second side in the axial direction.

In the above aspect, the pressing member is biased in the axial direction, and by the biased pressing member, the heat equalizing member is pressed in the axial direction. This makes it possible to firmly fix the heat equalizing member in the axial direction. Furthermore, because the pressing member is provided to function as the first magnetic member, an increase in cost is smaller as compared to the case in which the first magnetic member and the pressing member are provided as different members.

In an eighth aspect of the invention, the induction heating roller of any of the first to seventh aspects is arranged such that the heater includes a second magnetic member provided radially outward of the coil, the second magnetic member being provided so as to be opposed to the first magnetic member in the radial direction.

In this aspect, the heater is provided with the second magnetic member. This makes it possible to form a path through which magnetic flux readily passes along the second magnetic member. This facilitates the flow of magnetic flux between the first and second magnetic members opposed to each other in the radial direction when the magnetic flux flows between the heater provided radially inside and the roller unit provided radially outside. Accordingly, it is possible to reliably reduce the amount of magnetic flux passing through the fixing ring.

In a ninth aspect of the invention, the induction heating roller of the eighth aspect is arranged such that the second magnetic member is structured by a plurality of parts arranged in the circumferential direction of the fixing ring.

In this aspect, the flow of the magnetic flux between the first magnetic member and the second magnetic member is further facilitated, as compared to the case in which the second magnetic member is provided to cover only a limited area with respect to the circumferential direction of the fixing ring.

In a tenth aspect of the invention, the induction heating roller of the eighth or ninth aspect is arranged such that: the heater includes a third magnetic member provided adjacent to an end portion of the coil on the first side in the axial direction, the third magnetic member extending further radially outward relative to the coil; and the second magnetic member is provided in contact with the third magnetic member.

In this aspect, magnetic flux generated by currents flowing through the coil is intentionally guided by the third magnetic member to the second magnetic member. Thus, the magnetic flux are reliably introduced into the second magnetic member.

In an eleventh aspect of the invention, the induction heating roller of any of the first to tenth aspects is arranged such that the fixing ring has a relative permeability lower than that of the first magnetic member.

In this aspect, the fixing ring has the lower relative permeability, and this makes it less likely that magnetic flux passes through the fixing ring, and therefore eddy currents are less likely to flow in the fixing ring. This makes the heat generation in the fixing ring further smaller.

In a twelfth aspect of the present invention, an induction heating roller includes: a rotatable roller unit; and a heater including a coil provided radially inward of the roller unit. The roller unit includes: a roller main body including a cylindrical heating target configured to be heated by induction heating due to magnetic flux passing in an axial direction of the roller unit, the magnetic flux being generated by electric current flowing through the coil; a heat equalizing unit including a heat equalizing member which is in contact with an inner circumferential surface of the heating target, the heat equalizing member extending in the axial direction and having a heat conductivity higher at least than that of the inner circumferential surface of the heating target; and a fixing ring provided so as to be in contact with a first-side end portion of the heating target which is on a first side in the axial direction and with a first-side end portion of the heat equalizing unit which is on the first side in the axial direction, the fixing ring fixing the roller main body and the heat equalizing unit to each other. The fixing ring includes a high resistive portion provided at a part of the fixing ring with respect to its circumferential direction and configured to decrease eddy currents flowing in the circumferential direction.

In this aspect, as same as in the first aspect, the fixing ring is arranged to extend further radially inward relative to the heating target and the heat equalizing unit, which increases the likelihood of inflow of magnetic flux into the fixing ring. This may cause a problem that the magnetic flux passing through the fixing ring induces eddy currents whirling in the circumferential direction of the fixing ring, to cause great heat generation in the fixing ring. To deal with this, in this aspect, the high resistive portion is provided at a part of the fixing ring in the circumferential direction, and the high resistive portion decreases the eddy currents flowing in the circumferential direction of the fixing ring. Accordingly, it is possible to mitigate heat generation in the fixing ring provided to the induction heating roller.

In a thirteenth aspect of the invention, the induction heating roller of the twelfth aspect is arranged such that the high resistive portion has a cross-sectional area, which is orthogonal to the circumferential direction, smaller than that of a portion of the fixing ring other than the high resistive portion.

In this aspect, because the cross-sectional area of the high resistive portion orthogonal to the circumferential direction is smaller, the electric resistance in the circumferential direction is higher at the high resistive portion. The high electric resistance in the circumferential direction of the fixing ring makes it possible to reduce the eddy currents.

In a fourteenth aspect of the invention, the induction heating roller of the thirteenth aspect is arranged such that: the high resistive portion has a hole to make the cross-sectional area of the high resistive portion smaller than that of the portion other than the high resistive portion.

In this aspect, the high resistive portion with a smaller cross-sectional area is easily provided just by boring a hole at a part of the fixing ring.

In a fifteenth aspect of the invention, the induction heating roller of the fourteenth aspect is arranged such that the hole is filled with an insulator.

Providing a hollow hole at a part of the fixing ring in the circumferential direction may decrease the strength of the fixing ring at the high resistive portion. In this aspect, the insulator filling the hole mitigates such a decrease in strength of the fixing ring.

In a sixteenth aspect of the invention, the induction heating roller of the twelfth aspect is arranged such that: the fixing ring includes a plurality of ring pieces which are separable in the circumferential direction; the ring pieces are connected to each other via insulators; and portions of the fixing ring in which the insulators are respectively provided in the circumferential direction function as the high resistive portion.

In this aspect, due to the insulators interposed between the plurality of ring pieces, it is possible to reliably reduce the eddy currents from flowing while whirling in the circumferential direction of the fixing ring.

In a seventeenth aspect of the invention, the induction heating roller of any of the first to sixteenth aspects is arranged such that: the roller main body is supported in a cantilever manner; and the fixing ring is provided, in the axial direction, at a base end portion of the heating target, which is the first-side end portion of the heating target.

In the roller main body supported in a cantilever manner, a portion of the base end portion of the roller main body which is exposed to outside air is smaller than that of its leading end portion. Therefore, heat is less likely to be dissipated at the base end portion. For this reason, when heat is generated in the fixing ring provided to the base end portion of the heating target, the generated heat tends to be transmitted toward the leading end side of the heating target before being dissipated to the outside. The above tendency is more likely to cause a temperature gradient, in which the temperature is higher at the base end side in the axial direction of the heating target while the temperature is lower at the leading end side, resulting in the problem of poor distribution of temperature on the surface of the heating target. In this aspect, by mitigating the heat generation in the fixing ring provided to the base end portion of the heating target, the above-described temperature gradient is moderated, leading to improvement in the distribution of the temperature on the surface of the base end portion of the heating target.

In an eighteenth aspect, a spun yarn drawing device includes the induction heating roller recited in any one of the first to seventeenth aspects, and the apparatus is arranged such that a plurality of yarns are wound onto an outer circumferential surface of the induction heating roller in a lined-up manner in the axial direction.

In this aspect, it is possible to equalize the distribution of temperature of the roller surface, and to efficiently raise the temperature of the roller surface. This stabilizes the quality of the yarns wound onto the induction heating roller, to enable production of high-quality yarns.

### Brief Description of the Drawings

[FIG 1] FIG 1 is a schematic diagram illustrating a spun yarn take-up machine including induction heating rollers of a first embodiment of the present invention.
[FIG 2] FIG 2 is a cross section of one of the induction heating rollers.
[FIG 3] FIG 3(a) and FIG 3(b) include a perspective view and a side view of a heat equalizing unit and the like.
[FIG 4] FIG 4 is an explanatory diagram showing a path through which magnetic flux readily passes.
[FIG 5] FIG 5 is an explanatory diagram showing a path through which magnetic flux readily passes in the roller with a first magnetic member and a second magnetic member.
[FIG. 6] FIG. 6 is a graph showing a temperature distribution on the induction heating roller in its axial direction.
[FIG 7] FIG 7 is a diagram illustrating an induction heating roller of a second embodiment of the present invention.
[FIG 8] Each of FIG 8(a) and FIG 8(b) is a diagram illustrating a fixing ring.
[FIG 9] FIG 9 is a diagram illustrating a fixing ring of a modification of the second embodiment.

### Description of Embodiments

### [First Embodiment]

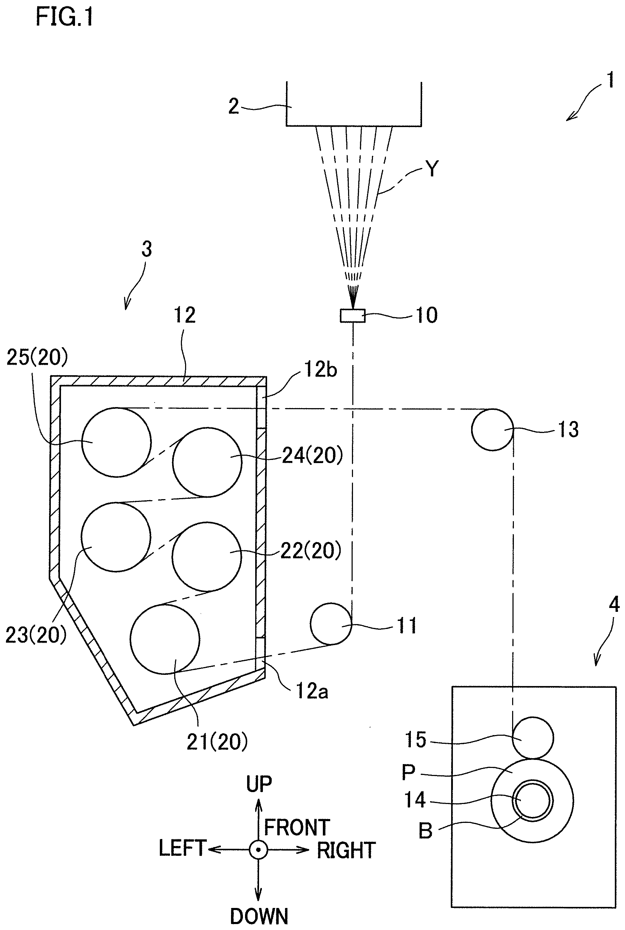

The following describes a first embodiment of the present invention with reference to FIG 1 to FIG 6.

### [Spun yarn take-up machine]

First of all, with reference to FIG 1, a description is given of the structure of a spun yarn take-up machine 1 including induction heating rollers 20 of the first embodiment. FIG 1 is a front view of the spun yarn take-up machine 1. The description below is given on the premise that the up-down direction, front-back direction, and left-right direction shown in FIG 1 are respectively the up-down direction, front-back direction, and left-right direction relative to the spun yarn take-up machine 1. The spun yarn take-up machine 1 is configured so that yarns Y spun out from a spinning apparatus 2 are drawn in a spun yarn drawing device 3 and the drawn yarns Y are wound up in a yarn winding apparatus 4.

The spinning apparatus 2 is configured to produce yarns Y by continuously spinning out molten polymer such as nylon and polyester. To the yarns Y spun out from the spinning apparatus 2, oil is applied at an oil guide 10. The yarns Y are then sent to the spun yarn drawing device 3 via a guide roller 11.

The spun yarn drawing device 3 is an apparatus for drawing the yarns Y and is provided below the spinning apparatus 2. The spun yarn drawing device 3 includes godet rollers 21 to 25 housed in a thermal insulation box 12. The godet rollers 21 to 25 are configured to be driven and rotated by respective motors. Each of the godet rollers 21 to 25 is the induction heating roller 20 heated by induction heating using a coil. Yarns Y are wound onto an outer circumferential surface of each of the godet rollers 21 to 25. The thermal insulation box 12 has, at a lower portion of its right side surface, an inlet 12a through which yarns Y are introduced into the thermal insulation box 12. The thermal insulation box 12 further has, at an upper portion of its right side surface, an outlet 12b through which yarns Y go out of the thermal insulation box 12. Yarns Y are wound onto each of the godet rollers 21 to 25, in order from the lowermost godet roller 21, at a winding angle smaller than 360 degrees.

The lower three godet rollers 21 to 23 are preheating rollers configured to preliminarily heat yarns Y before drawing them. The roller surface temperature of each of these rollers is arranged to be equal to or higher than the glass transition temperature of the yarns Y (e.g., on the order of 90 to 100 degrees centigrade). The upper two godet rollers 24 and 25 are conditioning rollers configured to thermally set the drawn yarns Y. The surface temperature of each of these rollers is arranged to be higher than the surface temperatures of the lower three godet rollers 21 to 23 (e.g., on the order of 150 to 200 degrees centigrade). Furthermore, the yarn feeding speeds of the upper two godet rollers 24 and 25 are higher than those of the lower three godet rollers 21 to 23.

The yarns Y introduced into the thermal insulation box 12 through the inlet 12a are, at first, preliminarily heated to a drawable temperature while being transferred by the godet rollers 21 to 23. The preliminarily heated yarns Y are drawn due to the difference in yarn feeding speed between the godet roller 23 and the godet roller 24. The yarns Y are then further heated to a higher temperature while being transferred by the godet rollers 24 and 25, with the result that the drawn yarns Y are thermally set. The yarns Y having been drawn in this way go out from the thermal insulation box 12 through the outlet 12b.

The yarns Y drawn by the spun yarn drawing device 3 are sent to the yarn winding apparatus 4 via a guide roller 13. The yarn winding apparatus 4 is an apparatus for winding the yarns Y and is provided below the spun yarn drawing device 3. The yarn winding apparatus 4 includes a bobbin holder 14, a contact roller 15, and the like. The bobbin holder 14 has a cylindrical shape extending in the front-back direction, and is driven and rotated by a motor, which is not illustrated. Bobbins B arranged side by side in an axial direction of the bobbin holder 14 are attached to the bobbin holder 14. The yarn winding apparatus 4 is configured to wind yarns Y onto the bobbins B at the same time by rotating the bobbin holder 14, to produce packages P. The contact roller 15 is configured to come into contact with the surfaces of the packages P to adjust the shape of each package P by applying a predetermined contact pressure to each package P.

### [Structure of Induction Heating Rollers]

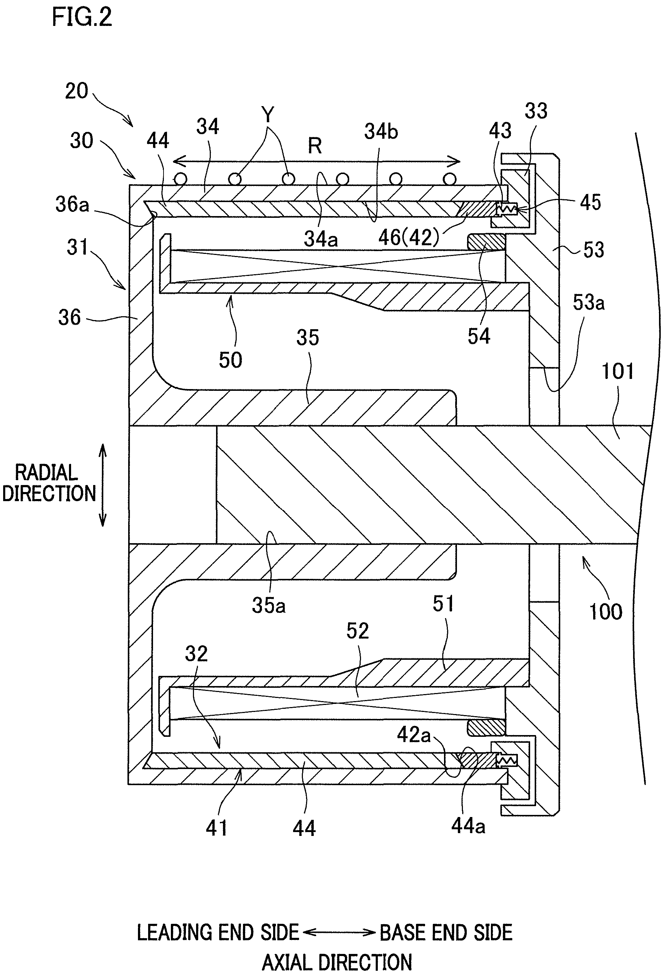

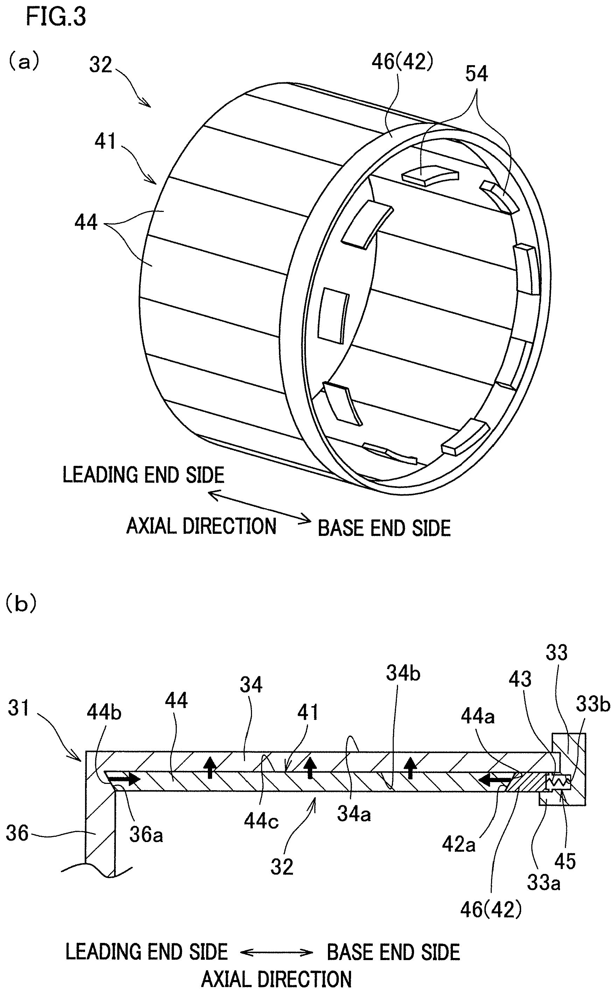

Next, the structure of each of the induction heating rollers 20, which are used as the godet rollers 21 to 25, will be described with reference to FIG 2 and FIG 3. FIG 2 is a cross section of each induction heating roller 20. FIG 3(a) is a perspective view of a heat equalizing unit 32 and the like, which will be described later. FIG 3(b) is a diagram showing a heat equalizing member 41 pressed by a pressing member 42. A roller main body 31 of the induction heating roller 20 is supported in a cantilever manner by a motor 100 configured to rotate and drive the roller main body 31. Hereinafter, a direction in which the roller main body 31 extends (i.e., a left-right direction on the sheet of FIG 2) is referred to as an "axial direction" or "axially". In the present embodiment, the axial direction of the roller main body 31 is identical with an axial direction of a roller unit 30 (which will be described later) and to an axial direction of a heat equalizing unit 32 (which will be described later). Relative to the roller main body 31, a side closer to the motor 100 in the axial direction is referred to as a "base end side" (a first side in the present invention). A side opposite from the base end side is referred to as a "leading end side" (a second side in the present invention). Furthermore, a radial direction of the roller main body 31 may be simply referred to as a "radial direction" or "radially". Still further, a circumferential direction of the roller main body 31 may be simply referred to as a "circumferential direction".

The induction heating roller 20 includes: the rotatable roller unit 30; and a heater 50 provided radially inward of the roller unit 30. The induction heating roller 20 is configured to raise the temperature of an outer circumferential surface of the roller unit 30 by induction heating caused by a coil 52 provided in the heater 50, and thereby to heat yarns Y wound onto the roller unit 30. The roller unit 30 is rotated and driven by the motor 100. The heater 50 is fixed to a heater supporting portion (not illustrated) attached to the motor 100. That is, the roller unit 30 is configured to be rotatable but the heater 50 is configured to be non-rotatable.

To begin with, the roller unit 30 will be described. The roller unit 30 includes: the roller main body 31; the heat equalizing unit 32; and a fixing ring 33. The roller main body 31 is a cylindrical member and is configured to be rotated and driven by the motor 100. The heat equalizing unit 32 is provided radially inward of the roller main body 31 and radially outward of the coil 52. The heat equalizing unit 32 is provided to equalize the temperature distribution on the roller main body 31 in the axial direction. The fixing ring 33 is attached to an axial base end portion (a base end portion in the axial direction) of the roller main body 31. The fixing ring 33 fixes the roller main body 31 and the heat equalizing unit 32 to each other. Hereinafter, details of each of the components will be described.

The roller main body 31 is, for example, made of carbon steel, which is magnetic and conductive material. The roller main body 31 includes: an outer cylindrical portion 34 (a heating target in the present invention) with a cylindrical shape, which is provided radially outward of the coil 52 and extends in the axial direction; a cylindrical core portion 35 provided radially inward of the coil 52; and an end face portion 36 connecting a leading end portion of the outer cylindrical portion 34 to a leading end portion of the core portion 35. The roller main body 31 has an open end on the base end side. The outer cylindrical portion 34, the core portion 35, and the end face portion 36 are, for example, unitarily formed as a single member. Alternatively, at least two of the outer cylindrical portion 34, the core portion 35, and the end face portion 36 may be respectively formed by components different from each other. For example, the following configuration is possible: the outer cylindrical portion 34 is formed by a first component; and the core portion 35 and the end face portion 36 are formed by a second component. In this case, the first component and the second component are fixed to each other, for example, by welding, or fixed by a fixing member such as screws or the like. Note that the whole of the roller main body 31 does not have to be made of one material (for example, of carbon steel mentioned above). That is, as long as the outer cylindrical portion 34 and the end face portion 36 are made of magnetic and conductive material, the rest of the roller main body 31 may be made of another material. The core portion 35 does not have to be made of magnetic material. Yarns Y are wound onto an outer circumferential surface 34a of the outer cylindrical portion 34. The length of the outer circumferential surface 34a in the axial direction is, for example, 180 mm. The heat equalizing unit 32 is in contact with an inner circumferential surface 34b of the outer cylindrical portion 34. The core portion 35 has a shaft inserting hole 35a in which a drive shaft 101 of the motor 100 is inserted. The drive shaft 101 is fitted in the shaft inserting hole 35a, and thereby the roller main body 31 is fixed to the drive shaft 101. This allows the roller main body 31 to be supported in a cantilever manner by the motor 100 and to be rotatable with the drive shaft 101. The end face portion 36 has, at its radially outer end portion, a contact surface 36a with which a leading end portion of the heat equalizing member 41 is in contact. The contact surface 36a is a tapered surface, which is sloped so that its thickness in the axial direction decreases toward radially outside.

The heat equalizing unit 32 includes: the heat equalizing member 41, the pressing member 42, and springs 43 (a biasing member in the present invention). The heat equalizing member 41 is used to equalize the distribution of the surface temperature of the outer cylindrical portion 34 of the roller main body 31 in the axial direction. The heat equalizing member 41 is a cylindrical member provided radially inward of the outer cylindrical portion 34 of the roller main body 31 and radially outward of the coil 52. The heat equalizing member 41 is pressed by the pressing member 42 and by the springs 43 toward the leading end side in the axial direction and radially outward, and due to this, the heat equalizing member 41 is fixed to the roller main body 31 (the details thereof will be described later.)

The heat equalizing member 41 is a cylindrical member extending in the axial direction, and is, for example, made of C/C composite material (carbon fiber reinforced-carbon matrix-composite material), which is a composite material of carbon fiber reinforcement in a matrix of graphite. The heat equalizing member 41 has a heat conductivity higher than that of the roller main body 31 made of carbon steel (at least higher than that of the inner circumferential surface 34b of the outer cylindrical portion 34). Due to its higher heat conductivity, the heat equalizing member 41 has a function of equalizing the temperature distribution on the outer cylindrical portion 34 in the axial direction. For example, the heat conductivity of carbon steel is 51.5 W/mk, while the heat conductivity of C/C composite material in the axial direction is 404 W/mk. Furthermore, the heat equalizing member 41 has a relative permeability lower than that of the roller main body 31. For example, the relative permeability of carbon steel is 100 to 2000, while the relative permeability of C/C composite material is approximately 1.

The heat equalizing member 41 is in contact with the inner circumferential surface 34b of the outer cylindrical portion 34 of the roller main body 31. Now an area of the outer circumferential surface 34a of the outer cylindrical portion 34 with respect to the axial direction, onto which yarns Y are wound, is defined as a wound region R. The heat equalizing member 41 is provided to cover the wound region R with respect to the axial direction. Furthermore, the heat equalizing member 41 is structured by a plurality of heat equalizing pieces 44 separable with respect to the circumferential direction (see FIG 3(a)). A base-end-side end face 44a and a leading-end-side end surface 44b of each heat equalizing piece 44 are tapered. To be more specific, the end face 44a is arranged so that its radially outer edge is on the base end side relative to its radially inner edge, in the axial direction. The end surface 44b is arranged so that its radially outer edge is on the leading end side relative to its radially inner edge, in the axial direction. The end surface 44b is shaped to match with the contact surface 36a of the end face portion 36 of the roller main body 31.

The pressing member 42 is biased by the springs 43, and thereby to press the heat equalizing member 41 toward the leading end side in the axial direction and outward in the radial direction. The pressing member 42 is a ring-like member (see FIG 3(a)), and its outer diameter and inner diameter are substantially equal to those of the heat equalizing member 41, respectively. A leading-end-side end face 42a of the pressing member 42 is a tapered pressing surface arranged so that its radially inner edge is on the leading end side in the axial direction relative to its radially outer edge. That is, the end face 42a is designed to match with the surface formed by the above-described base-end-side end faces 44a of the heat equalizing pieces 44. Each spring 43 is in a gap 45 between the pressing member 42 and the fixing ring 33 in the axial direction. A base end portion and a leading end portion of the spring 43 are in contact with the fixing ring 33 and the pressing member 42, respectively, and the spring 43 is compressed in the axial direction. Due to this, each spring 43 biases, with its restoring force, the pressing member 42 toward the leading end side in the axial direction. Because the pressing member 42 is biased by the springs 43, the heat equalizing member 41 is pressed toward the leading end side in the axial direction (see an arrow in the left-right direction on the sheet of FIG 3(b)). Simultaneously, due to the tapered end face 42a, the heat equalizing member 41 is pressed also outward in the radial direction (see arrows in the up-down direction on the sheet of FIG 3(b)). As a result, outer circumferential surfaces 44c of the heat equalizing pieces 44 are reliably brought into contact with the inner circumferential surface 34b of the outer cylindrical portion 34 of the roller main body 31. It should be noted that the number of springs 43 is not particularly limited. Instead of the one or more springs 43, a rubber elastic member or the like may be used as a biasing member biasing the pressing member 42.

The fixing ring 33 is a ring-like member provided at an axial base end portion of the outer cylindrical portion 34 of the roller main body 31. The fixing ring 33 is, for example, made of carbon steel as same as the roller main body 31. That is, the relative permeability of the above-described heat equalizing member 41 is lower than the relative permeability of the fixing ring 33. The fixing ring 33 extends further radially outward relative to the outer cylindrical portion 34 of the roller main body 31, and extends further radially inward relative to the heat equalizing unit 32. A radially inner end portion of the fixing ring 33 is closer to the coil 52 than the outer cylindrical portion 34 and than the heat equalizing unit 32 in the radial direction. That is, the distance between the fixing ring 33 and the coil 52 in the radial direction is shorter than the distance between the heat equalizing unit 32 and the coil 52 in the radial direction. The fixing ring 33 is provided in contact with the axial base end portion of the roller main body 31 and with an axial base end portion of the heat equalizing unit 32. Specifically, as shown in FIG 3(b), the fixing ring 33 has a surrounding portion 33a. The surrounding portion 33a is shaped so as to surround a part of the roller main body 31 and a part of the heat equalizing unit 32 with respect to three sides thereof, i.e., the radially outer side, the radially inner side, and the base end side in the axial direction. Thus, the base end portion of the outer cylindrical portion 34 of the roller main body 31 and a base end portion of the pressing member 42 are surrounded, with the result that the roller main body 31 and the heat equalizing unit 32 are fixed. Furthermore, the fixing ring 33 has a recessed portion 33b to accommodate the springs 43. The recessed portion 33b provides the gap 45 between the pressing member 42 and the fixing ring 33 in the axial direction.

The following describes the heater 50. The heater 50 includes: a bobbin member 51, the coil 52, and a flange 53. In the heater 50, the coil 52 is wound around the bobbin member 51 extending in the axial direction. An axial base end portion of the bobbin member 51 is attached to the flange 53.

The bobbin member 51 is a cylindrical member provided radially inward of the outer cylindrical portion 34 of the roller main body 31 and radially outward of the core portion 35. The bobbin member 51 is, for example, made of carbon steel as same as the roller main body 31. The coil 52 is wound around an outer periphery of the bobbin member 51.

The coil 52 is used to heat the roller main body 31 by induction heating. The coil 52, which is wound around the bobbin member 51, is provided inward of the outer cylindrical portion 34 of the roller main body 31 and outward of the core portion 35. As an alternating voltage is applied to the coil 52, an alternating current flows through the coil 52, to generate an alternating magnetic field.

The flange 53 is a disc-like member. The flange 53 has, at its radially central portion, a through hole 53a so that the flange 53 and the drive shaft 101 of the motor 100 do not interfere with each other. The flange 53 is, for example, made of carbon steel as same as the roller main body 31. The flange 53 is provided at an axial base end portion of the heater 50. The axial base end portion of the bobbin member 51 is attached to the flange 53. The flange 53 is fixed to the heater supporting portion (not shown) of the motor 100. The flange 53 extends further radially outward relative to the coil 52. A radially outer end portion of the flange 53 is positioned on the base end side in the axial direction relative to the fixing ring 33 of the roller unit 30, so as to cover the fixing ring 33. There is a gap between the flange 53 and the fixing ring 33, to prevent interference between the flange 53 of the heater 50 configured not to rotate and the fixing ring 33 of the roller unit 30 configured to rotate.

As an alternating voltage is applied to the coil 52 in each induction heating roller 20, an alternating current flows through the coil 52, to generate an alternating magnetic field, and magnetic flux passes through the outer cylindrical portion 34 of the roller main body 31 in the axial direction. This induces eddy currents flowing in the roller main body 31 in the circumferential direction, and the outer cylindrical portion 34 is heated by Joule heating. The induction heating rollers 20 each generally has difficulty in obtaining equal distribution of the surface temperature of the roller main body 31 because heat generation therein is less likely to be equal in the axial direction and because the heat is more likely to be dissipated at the axial end portions of the roller main body 31 to the outside. For this reason, the heat equalizing member 41 is used to equalize the distribution of temperature on the outer cylindrical portion 34 in the axial direction. As described above, the heat equalizing member 41 has a lower relative permeability. Therefore, the magnetic flux is less likely to pass through the heat equalizing member 41, and heat is less likely to be generated in the heat equalizing member 41.

### [Problem of excessive heat generation in fixing ring]

As described above, at the axial end portions of the roller main body 31, it is more likely that heat is dissipated to the outside, to cause a surface temperature drop. In view of the above, the present inventors used carbon steel, which is a ferromagnetic material, as a material of the fixing ring 33 in order to improve the distribution of the surface temperature of the roller main body by facilitating the flow of magnetic flux through the fixing ring 33 to facilitate the generation of eddy currents, thereby to increase the amount of heat generation at the base end portion of the roller main body 31. Magnetic flux tends to, in nature, concentratedly flow through the shortest path, through which magnetic flux readily passes, among paths for magnetic flux. Because of this, the present inventors selected at first SUS (Steel Use Stainless), which is a non-magnetic material, as a material of the pressing member 42 so that magnetic flux passes through the fixing ring 33 rather than through the pressing member 42. However, when this configuration was actually tested with the heater 50 turned on, excessive heat was generated in the fixing ring 33 and the temperature at the base end portion of the roller main body 31 rose higher than that of its axially central portion, disadvantageously.

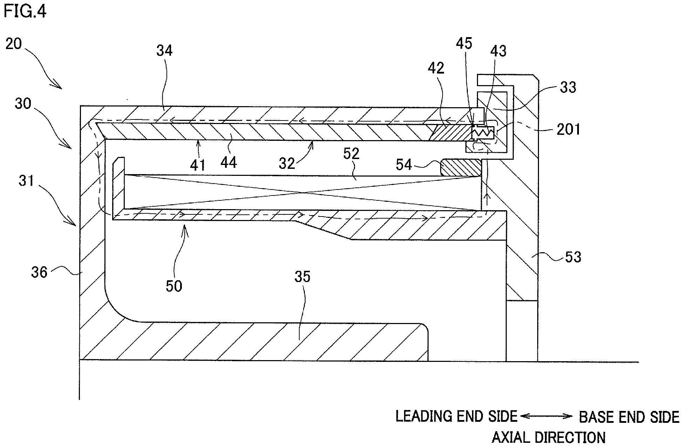

The above-described problem will be schematically described with reference to FIG 4. In the induction heating roller 20, a path 201 through which magnetic flux readily passes is formed by the members made of ferromagnetic carbon steel. (It should be noted that arrows are depicted just to improve visibility. The direction of the magnetic flux changes when the direction of the current flowing through the coil 52 changes.) To be more specific, the path 201 extends through the bobbin member 51, the flange 53, the fixing ring 33, the outer cylindrical portion 34 of the roller main body 31, and the end face portion 36. Because magnetic flux tends to, in nature, pass near a surface of a ferromagnetic material ("skin effect"), the path 201 is formed so as to pass on or near the surfaces of the above-described members.

If the magnetic flux concentratedly flows through the path 201, eddy currents are excessively induced in the fixing ring 33, leading to a large amount of heat generation in the fixing ring 33. In particular, magnetic flux passing through the fixing ring 33 in the axial direction induces eddy currents whirling in the circumferential direction of the fixing ring 33. This makes the heat generation more significant. Furthermore, the fixing ring 33 is provided at the base end portion of the roller unit 30 supported in a cantilever manner, and a portion of the fixing ring 33 which faces the outside is smaller than that of a leading end portion of the roller unit 30. Therefore, the heat is less likely to be dissipated from the fixing ring 33. For this reason, the heat generated in the fixing ring 33 is more likely to be transmitted toward a leading-end-side portion of the outer cylindrical portion 34 of the roller main body 31 before it is dissipated to the outside. The present inventors considered that this tends to cause a temperature gradient, in which the higher temperatures are observed at a base-end-side portion of the outer cylindrical portion 34 while lower temperatures are observed at the leading-end-side portion thereof, resulting in the problem of poor distribution of temperature on the outer circumferential surface 34a of the outer cylindrical portion 34.

To mitigate heat generation in the fixing ring 33, each induction heating roller 20 has the below-described configuration. Specifically, a description will be given, referring back to FIG 2 and FIG 3.

### [First magnetic member and second magnetic member]

In the first embodiment, each induction heating roller 20 has the following configuration so as to provide another path through which magnetic flux readily passes, which is different from the above-described path 201 (see FIG 4). First of all, the pressing member 42 provided to press the heat equalizing member 41 is made of carbon steel, which is a ferromagnetic material, as same as the roller main body 31 and the like. Hereinbelow, the pressing member 42 is referred to as a first magnetic member 46. In other words, the pressing member 42 is used as the first magnetic member 46. As shown in FIG 2, the first magnetic member 46 is provided between the outer cylindrical portion 34 of the roller main body 31 and the coil 52 in the radial direction, and is provided on the base end side relative to the center of the outer cylindrical portion 34 in the axial direction and on the leading end side relative to the fixing ring 33. The first magnetic member 46 is in contact with the inner circumferential surface 34b of the outer cylindrical portion 34 and in contact with the heat equalizing member 41. There is the gap 45 between the first magnetic member 46 and the fixing ring 33 in the axial direction. It is preferable that the first magnetic member 46 is provided so as to correspond to the whole circumference in the circumferential direction, as shown in FIG 3(a), for example. However, the present invention is not limited to this. For example, the first magnetic member 46 may be structured by parts separable in the circumferential direction and arranged with spaces interposed between them.

The heater 50 includes a second magnetic member 54. The second magnetic member 54 is made of carbon steel, as same as the first magnetic member 46. As shown in FIG 2, the second magnetic member 54 is provided radially outward of the coil 52, and is provided so as to be opposed to the first magnetic member 46 in the radial direction. The second magnetic member 54 is attached to the flange 53 (a third magnetic member of the present invention), and is in contact with the flange 53. The second magnetic member 54 is provided so that the second magnetic member 54 and the first magnetic member 46, which is provided to the rotating roller unit 30, do not interfere with each other. It is preferable that, as shown in FIG 3(a), for example, the second magnetic member 54 is structured by parts arranged in the circumferential direction with spaces interposed between them. However, the present invention is not limited to this.

### [Path of magnetic flux]

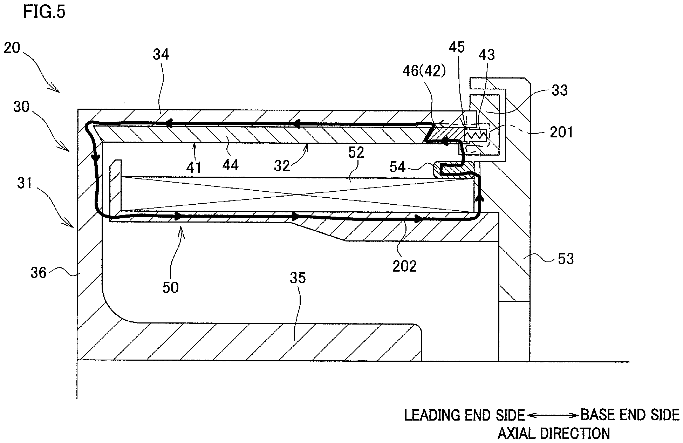

In each induction heating roller having the above-described configuration, a new path through which magnetic flux readily passes is formed by the first magnetic member 46 and the second magnetic member 54. This will be schematically described with reference to FIG. 5.

As shown in FIG 5, a path 202 (see a bold line in FIG 5) through which magnetic flux readily passes is formed aside from the path 201 by the first magnetic member 46 and the second magnetic member 54. To be more specific, the path 202 passes through the bobbin member 51, the flange 53, the second magnetic member 54, a part of the fixing ring 33, the first magnetic member 46, and the outer cylindrical portion 34, and the end face portion 36 of the roller main body 31. Now, among the paths through which magnetic flux can pass, reference is made in particular to paths formed in the roller unit 30. Of these, the path passing through the first magnetic member 46 (see the path 202) is shorter than the path passing through the base end portion of the roller main body 31 and through the fixing ring 33 (see the path 201). Due to this, magnetic flux is more readily to pass through the path 202 than the path 201, and this reduces the amount of magnetic flux passing through the fixing ring 33. This reduces generation of eddy currents in the fixing ring 33.

In the above-described configuration, the inflow of magnetic flux toward the fixing ring 33 is further reduced due to the following two reasons. The first reason is that the first magnetic member 46 is in contact with the inner circumferential surface 34b of the outer cylindrical portion 34. This facilitates the flow of magnetic flux between the first magnetic member 46 and the outer cylindrical portion 34, and this decreases the possibility that the magnetic flux detours to flow into the fixing ring 33. The second reason is that there is the gap 45 between the first magnetic member 46 and the fixing ring 33 in the axial direction. This decreases the possibility that the magnetic flux passing through the first magnetic member 46 flows into the fixing ring 33.

Because the magnetic flux passes through the first magnetic member 46, the first magnetic member 46 is also heated by induction heating. As described above, the first magnetic member 46 is in contact with the inner circumferential surface 34b of the outer cylindrical portion 34 and in contact with the heat equalizing member 41. Due to this, heat generated in the first magnetic member 46 is directly transmitted to the outer cylindrical portion 34, or is transmitted to the outer cylindrical portion 34 via the heat equalizing member 41. Consequently, the outer cylindrical portion 34 is efficiently heated.

### [Change in temperature distribution due to presence or absence of first and second magnetic members]

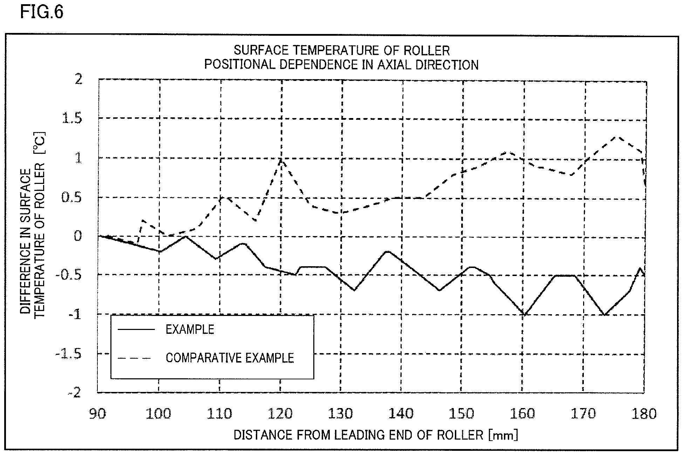

With reference to FIG 6, the following describes a change in distribution of temperature on the outer circumferential surface 34a of the outer cylindrical portion 34 of the roller main body 31 in the axial direction, due to the presence or absence of the first magnetic member 46 and the second magnetic member 54. The present inventors observed the distribution of the temperature on the outer circumferential surface 34a in the axial direction for two cases with and without the first and second magnetic members 46 and 54, for comparison. (For the case without the magnetic members, the pressing member 42 is made of non-magnetic material, and no second magnetic member 54 is provided.) In both cases, the temperature at a center of the outer circumferential surface 34a in the axial direction was set to 150 degrees centigrade. Furthermore, the operation speed (circumferential speed) of the roller unit 30 was set to 5500 m/min. Under these conditions, comparison was made for the distribution of the temperature on the outer circumferential surface 34a in the axial direction, between the case in which the first magnetic member 46 and the second magnetic member 54 are provided ("Example") and the case in which these magnetic members are not provided ("Comparative Example").

The result of the comparison is shown in FIG 6. The horizontal axis represents the distance of a point on the outer circumferential surface 34a from a leading end of the roller main body 31. That is, the smaller the distance is, the closer the point is to the leading end of the roller main body 31. The larger the distance is, the closer the point is to a base end of the roller main body 31. As described above, the length of the outer circumferential surface 34a in the axial direction is 180 mm. The vertical axis represents the difference in the surface temperature from the temperature at the center of the outer circumferential surface 34a in the axial direction (hereinafter "axially central portion"), that is, at the point at the above distance of 90 mm. In Comparative Example (see a broken line in FIG 6), the larger the distance from the leading end of the roller main body 31 is (that is, the closer the point is to the fixing ring 33 on the base end side), the higher the surface temperature is. At some points, there were observed 1 degrees centigrade or more differences from the surface temperature at the axially central portion. Meanwhile, in Example (see a solid line in FIG 6), it was observed that the temperatures at the axial base end portion of the outer circumferential surface 34a were somewhat lower than the temperature at the axially central portion. Furthermore, the difference in the surface temperature between the axial base end portion and the axially central portion of the outer circumferential surface 34a was within 1 degrees centigrade at every point. Thus, the temperature gradient at the axial base end portion of the outer circumferential surface 34a has been improved. It was confirmed that the heat generation in the fixing ring 33 was reduced by providing the first magnetic member 46 and the second magnetic member 54 thereby to form the path 202 (see FIG 5) through which magnetic flux more readily passes than the path 201.

As described above, the first magnetic member 46 is provided radially inward of the outer cylindrical portion 34, and is provided on the base end side relative to the axial center of the outer cylindrical portion 34 in the axial direction and on the leading end side relative to the fixing ring 33 in the axial direction. Thus, appropriately disposing the first magnetic member 46 makes it possible to form the new path 202 through which magnetic flux more readily passes than the path 201 extending via the fixing ring 33. Due to this, as compared to the case in which no first magnetic member 46 is provided, the amount of magnetic flux passing through the fixing ring 33 can be reduced, leading to reduction of eddy currents generated in the fixing ring 33. In this way, it is possible to mitigate heat generation in the fixing ring 33 provided to the induction heating roller 20.

Furthermore, in the configuration in which: the heat equalizing member 41 has a low relative permeability; and this increases the likelihood of concentrated inflow of magnetic flux into the fixing ring 33, it is possible to effectively decrease the amount of magnetic flux passing through the fixing ring 33 by forming the path 202, through which magnetic flux readily passes, by the first magnetic member 46.

Furthermore, in the configuration in which the first magnetic member 46 is provided so as to correspond to the whole circumference in the circumferential direction, it is possible to further reduce the inflow of magnetic flux into the fixing ring 33, as compared to the case in which the first magnetic member 46 is provided only partially with respect to the circumferential direction.

Furthermore, the first magnetic member 46 is in contact with the inner circumferential surface 34b of the outer cylindrical portion 34. As compared to the case in which there is a gap between the first magnetic member 46 and the outer cylindrical portion 34, the above arrangement facilitates the flow of magnetic flux between the first magnetic member 46 and the outer cylindrical portion 34, and therefore it is possible to reduce the amount of magnetic flux detouring to flow into the fixing ring 33.

Furthermore, the first magnetic member 46 is in contact with the heat equalizing member 41. This allows heat generated in the first magnetic member 46 by induction heating to be transmitted to the outer cylindrical portion 34 via the heat equalizing member 41. This makes it possible to efficiently heat the outer cylindrical portion 34.

Furthermore, there is the gap 45 between the first magnetic member 46 and the fixing ring 33. Due to this, as compared to the case in which the first magnetic member 46 is in contact with the fixing ring 33, it is possible to reduce the transmission of heat, generated by eddy currents flowing in the first magnetic member 46, toward the fixing ring 33. This makes a temperature rise in the fixing ring 33 smaller. Furthermore, due to the presence of the gap 45, magnetic flux is less likely to flow toward the fixing ring 33.

Furthermore, the pressing member 42 (the first magnetic member 46) is biased in the axial direction and thereby the heat equalizing member 41 is pressed by the pressing member 42. This allows the heat equalizing member 41 to be firmly fixed in the axial direction. Furthermore, because the pressing member 42 is provided to function as the first magnetic member 46, an increase in cost is smaller as compared to the case in which the first magnetic member 46 and the pressing member 42 are provided as different members.

Furthermore, because the second magnetic member 54 is provided to the heater 50, a path through which magnetic flux readily passes can be formed along the second magnetic member 54. This facilitates the flow of magnetic flux between the first magnetic member 46 and the second magnetic member 54 opposed to each other in the radial direction when the magnetic flux flows between the heater 50 provided radially inside and the roller unit 30 provided radially outside. Accordingly, it is possible to reliably reduce the amount of magnetic flux passing through the fixing ring 33.

Furthermore, in the configuration in which the second magnetic member 54 is structured by parts arranged in the circumferential direction, the flow of the magnetic flux between the first magnetic member 46 and the second magnetic member 54 is further facilitated, as compared to the case in which the second magnetic member 54 is provided to cover only a limited area with respect to the circumferential direction.

Furthermore, generated magnetic flux is intentionally guided by the flange 53 functioning as the third magnetic member to the second magnetic member 54. This allows the magnetic flux to be reliably introduced into the second magnetic member 54.

Furthermore, in the configuration in which the roller main body 31 is supported in a cantilever manner, heat generation in the fixing ring 33 provided to the base end portion is mitigated, thereby to moderate the above-described temperature gradient, leading to improvement in the distribution of the temperature on the axial base end portion of the outer circumferential surface 34a of the outer cylindrical portion 34.

Furthermore, in the spun yarn drawing device 3 including the above-described induction heating rollers 20, it is possible to equalize the distribution of temperature on roller surfaces, and to efficiently raise the temperature on the roller surfaces. This stabilizes the quality of yarns Y wound onto the induction heating rollers 20, to enable production of high-quality yarns.

The following will describe modifications of the first embodiment. Components which are equivalent to or the same as those in the first embodiment are given the same reference numerals, and the descriptions thereof are not repeated, if appropriate.

(1) In the first embodiment, the fixing ring 33 is made of ferromagnetic carbon steel. However, the present invention is not limited to this. That is, the fixing ring 33 may have a relative permeability lower than that of the first magnetic member 46 made of carbon steel. For example, the fixing ring 33 may be made of a non-magnetic material such as SUS (Steel Use Stainless) having a relative permeability of approximately 1. In this arrangement, magnetic flux is less likely to pass through the fixing ring 33, and therefore eddy currents are less likely to flow through the fixing ring 33. Accordingly, heat generation in the fixing ring 33 is further reduced. Also in this arrangement, due to the presence of the first magnetic member 46, a path for magnetic flux is formed, such that the magnetic flux readily passes through the outer cylindrical portion 34 of the roller main body 31. This mitigates the deterioration of efficiency in induction heating of the outer cylindrical portion 34.
(2) In the first embodiment, the second magnetic member 54 is in contact with the flange 53. However, the present invention is not limited to this. That is, there may be a gap between the second magnetic member 54 and the flange 53. Also in this arrangement, magnetic flux can readily pass between the second magnetic member 54 and the flange 53 when the gap is small.
(3) In the first embodiment, the second magnetic member 54 is provided to the heater 50. However, the present invention is not limited to this. That is, as long as the first magnetic member 46 is provided to the roller unit 30, the path through which magnetic flux readily passes without passing through the fixing ring 33 is formed. This reduces the amount of magnetic flux flowing into the fixing ring 33, to mitigate heat generation in the fixing ring 33.
(4) In the first embodiment, the first magnetic member 46 is biased by the springs 43. However, the present invention is not limited to this. The first magnetic member 46 does not have to be biased in the axial direction. Furthermore, the gap 45 may not exist between the first magnetic member 46 and the fixing ring 33. When the first magnetic member 46 is not biased by the springs 43, the fixing ring 33 does not have to be shaped so as to surround the part of the roller main body 31 and the part of the heat equalizing unit 32.
(5) In the first embodiment, the pressing member 42 functions as the first magnetic member 46. However, the present invention is not limited to this. The first magnetic member 46 may be provided as a member different from the pressing member 42. Also in this arrangement, the pressing member 42 does not have to be biased by the springs 43, as described above. The first magnetic member 46 does not have to be in contact with the outer cylindrical portion 34 and/or with the heat equalizing member 41.
(6) In the first embodiment, the roller main body 31 is supported in a cantilever manner. However, the present invention is not limited to this. That is, each induction heating roller may be supported at its both ends. Also in this arrangement, there is a possibility that excessive heat is generated in the fixing ring 33 by induction heating, at an end portion of the roller in the axial direction to which the fixing ring 33 is provided. Also in this arrangement, providing the first magnetic member 46 and the like to form a path through which magnetic flux readily passes, thereby to reduce the inflow of magnetic flux into the fixing ring 33, to reduce the generation of eddy currents, is effective to mitigate heat generation in the fixing ring 33.
(7) In the first embodiment, the induction heating rollers 20 configured to heat yarns Y have been described. However, the application of induction heating rollers 20 is not limited to heating yarns Y. Each induction heating roller may be used to heat objects other than yarns Y, for example, to heat sheet-like materials such as films, paper, non-woven fabric, sheet resin, and the like, or to heat toner or the like placed in the form of an image on a sheet, which is provided in a photocopier and the like.

### [Second Embodiment]

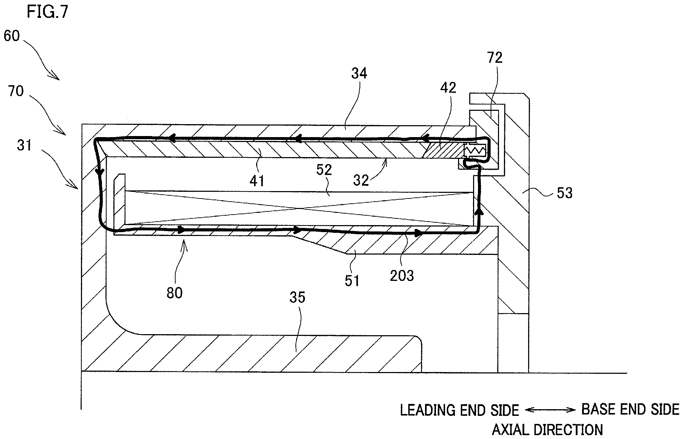

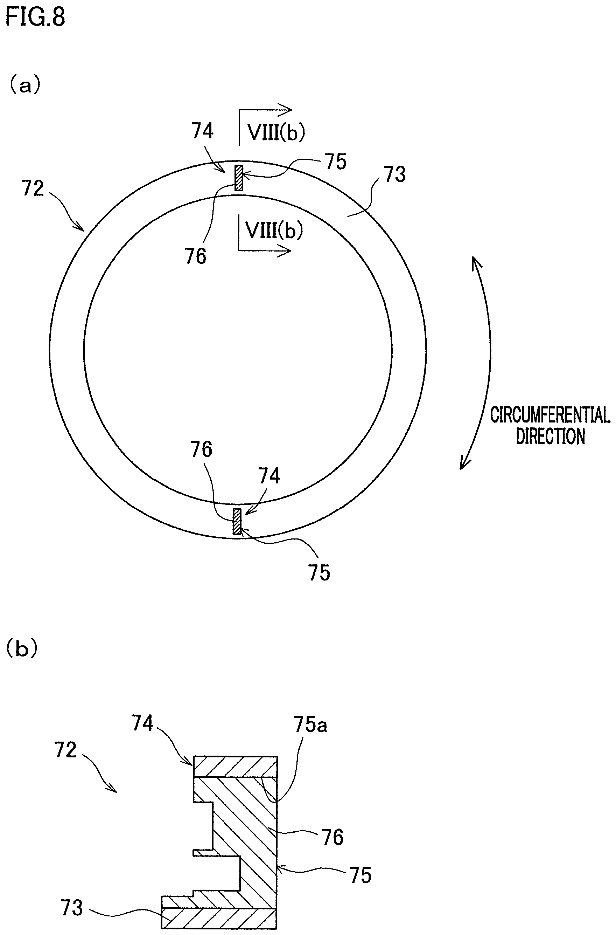

The following describes a second embodiment of the present invention with reference to FIG 7, FIG 8(a), and FIG 8(b). Components which are equivalent to or the same as those in the first embodiment are given the same reference numerals, and the descriptions thereof are not repeated, if appropriate.

FIG 7 is a cross section of an induction heating roller 60 of the second embodiment of the present invention. FIG. 8(a) shows a fixing ring 72, viewed from the base end side in the axial direction. The fixing ring 72 will be described later. FIG 8(b) is a cross section taken along VIII(b)-VIII(b) in FIG 8(a).

The induction heating roller 60 of the second embodiment of the present invention includes a roller 70 and a heater 80. The roller 70 includes: the roller main body 31 including the outer cylindrical portion 34; the heat equalizing unit 32 including the heat equalizing member 41; and the fixing ring 72 made of carbon steel. The roller main body 31 is supported in a cantilever manner.

Now, a description will be given of differences between the induction heating roller 60 and the induction heating roller 20 of the first embodiment. The pressing member 42 of the roller 70 is made of non-magnetic material such as SUS. That is, the first magnetic member 46 is not provided. Furthermore, the second magnetic member 54 is not provided to the heater 80.

Due to the above-described arrangement, in the induction heating roller 60, a path 203 (see a bold line) passing through the fixing ring 72 made of carbon steel is formed as a path through which magnetic flux readily passes. If excessive eddy currents flow in the circumferential direction of the fixing ring 72 due to the magnetic flux passing through the fixing ring 72, excessive heat may be generated in the fixing ring 72. For this reason, the fixing ring 72 has the following configurations in order to mitigate heat generation in the fixing ring 72 by reducing eddy currents.

As shown in FIG 8(a) and (b), the fixing ring 72 has high resistive portions 74. Each high resistive portion 74 is a portion of the fixing ring 72 in the circumferential direction. The high resistive portion 74 has an electric resistance higher than that of other portion in the circumferential direction. In FIG. 8(a), two high resistive portions 74 are provided. The high resistive portions 74 are portions of a ring main body 73 made of conductive material, which portions respectively have holes 75 with respect to the circumferential direction. Each hole 75 is, for example, a hole bored through the ring main body 73 in the axial direction and shaped like a slit extending in the radial direction (see FIG 8(a) and (b)). Because of this, the cross-sectional area of each high resistive portion 74 (strictly speaking, the cross-sectional area of each portion of the conductive ring main body 73) orthogonal to the circumferential direction is smaller than that of the portion other than the high resistive portions 74. This makes the electric resistance at the high resistive portions 74 in the circumferential direction higher than that at the portion other than the high resistive portions 74. The high resistive portions 74 therefore decrease the eddy currents flowing in the circumferential direction, to mitigate heat generation in the fixing ring 72. Each hole 75 is filled with an insulator 76. By filling the holes 75 with the insulators 76, a decrease in strength of high resistive portions 74 is mitigated. The insulator 76 is made of synthetic resin, for example, and is firmly attached to an inner circumferential surface 75a of the corresponding hole 75.

The shape and the like of each hole 75 is not particularly limited, as long as it reduces the cross-sectional area of the high resistive portions 74. For example, each hole 75 may be a round hole, instead of the slit-shaped hole. Furthermore, each hole 75 does not have to be bored through the ring main body 73 in the axial direction. It may be bored through the ring main body 73 in the radial direction, for example. Still further, each hole 75 does not have to be a through hole bored through the ring main body 73. Moreover, the number of the holes 75 is not limited to two. Furthermore, each high resistive portion 74 may have a notch or the like, instead of the hole 75.

As described above, the fixing ring 72 is provided with the high resistive portions 74. Due to this, eddy currents flowing in the circumferential direction of the fixing ring 72 are reduced by the high resistive portions 74, and this makes it possible to mitigate heat generation in the fixing ring 72 provided to the induction heating roller 60.

Furthermore, because the cross-sectional area of each high resistive portion 74 orthogonal to the circumferential direction is smaller, the electric resistance in the circumferential direction is higher at the high resistive portion 74. The high electric resistance in the circumferential direction of the fixing ring 72 reduces the eddy currents flowing therein.

Furthermore, the one or more high resistive portions 74 each having a smaller cross-sectional area can be easily provided just by boring the hole(s) 75 in the ring main body 73 of the fixing ring 72.

Furthermore, the insulator filling each hole 75 mitigates the decrease in strength of the fixing ring 72.

The following will describe modifications of the second embodiment. Components which are equivalent to or the same as those in the second embodiment are given the same reference numerals, and the descriptions thereof are not repeated, if appropriate.

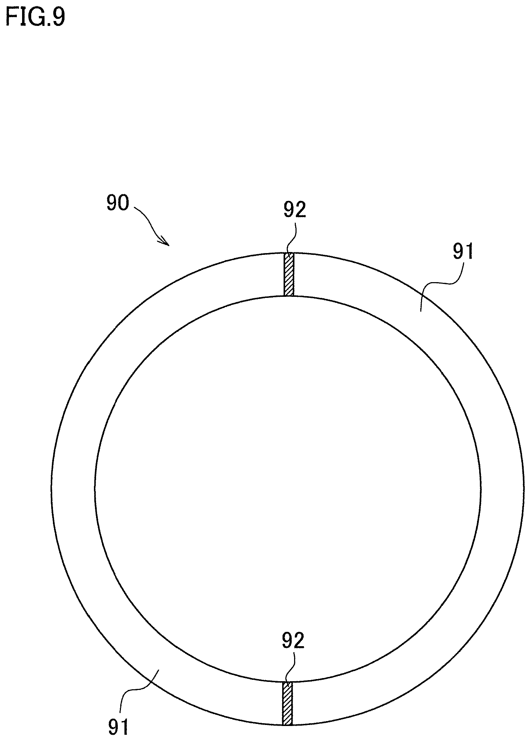

(1) In the second embodiment, each high resistive portion 74 of the fixing ring 72 has the hole 75 bored through the ring main body 73, but the present invention is not limited to this. For example, as shown in FIG 9, a fixing ring 90 may be structured by a plurality of ring pieces 91 which are separable in the circumferential direction and are connected to one another by insulators 92. Each insulator 92 is made of synthetic resin, for example, and is provided between the corresponding two ring pieces 91 and firmly attached to the ring pieces 91. Thus, the insulators 92 interposed between the ring pieces 91 reliably reduces eddy currents from flowing while whirling in the circumferential direction of the fixing ring 90. In this modification, portions of the fixing ring 90 in the circumferential direction, at which the insulators 92 are provided, correspond to the "high resistive portion" in the present invention.
(2) Also in the second embodiment, the roller main body 31 is supported in a cantilever manner. However, the present invention is not limited to this. That is, each induction heating roller 60 may be supported at its both ends. Also in this arrangement, it is possible to mitigate heat generation in the fixing ring 72 by providing the at least one high resistive portion 74 in the fixing ring 72 to reduce generation of eddy currents.
(3) Each induction heating roller 60 may be configured to heat objects other than yarns Y, as same as each induction heating roller 20 described in the first embodiment. That is, each induction heating roller 60 may be configured to heat sheet-like materials such as films, paper, non-woven fabric, sheet resin, and the like, or to heat toner or the like placed in the form of an image on a sheet, which is provided in a photocopier and the like.

### Reference Signs List

3: spun yarn drawing device
20: induction heating roller
30: roller unit
31: roller main body
32: heat equalizing unit
33: fixing ring
34: outer cylindrical portion (heating target)
34b: inner circumferential surface
41: heat equalizing member
42: pressing member
42a end face
43: spring (biasing member)
44a: end face
45: gap
46: first magnetic member
50: heater
52: coil
53: flange (third magnetic member)
54: second magnetic member
60: induction heating roller
72: fixing ring
74: high resistive portion
75: hole
76: insulator
90: fixing ring
91: ring piece
92: insulator
Y: yarn

## Claims

1. An induction heating roller (20) comprising:
a rotatable roller unit (30); and
a heater (50) including a coil (52) provided radially inward of the roller unit (30),
the roller unit (30) comprising:
a roller main body (31) including a cylindrical heating target (34) configured to be heated by induction heating due to magnetic flux passing in an axial direction of the roller unit (30), the magnetic flux being generated by electric current flowing through the coil (52);
a heat equalizing unit (32) including a heat equalizing member (41) which is in contact with an inner circumferential surface (34b) of the heating target (34), the heat equalizing member (41) extending in the axial direction and having a heat conductivity higher at least than that of the inner circumferential surface (34b) of the heating target (34); **characterized by**
a fixing ring (33) provided so as to be in contact with a first-side end portion of the heating target (34) which is on a first side in the axial direction and with a first-side end portion of the heat equalizing unit (32) which is on the first side in the axial direction, the fixing ring (33) fixing the roller main body (31) and the heat equalizing unit (32) to each other; and
by a first magnetic member (46) provided between the heating target (34) and the coil (52) in the radial direction, the first magnetic member (46) being provided on the first side relative to a center of the heating target (34) in the axial direction and on a second side opposite to the first side relative to the fixing ring (33) in the axial direction.

2. The induction heating roller (20) according to claim 1, wherein the heat equalizing member (41) has a relative permeability lower than that of the fixing ring (33).

3. The induction heating roller (20) according to claim 1 or 2, wherein the first magnetic member (46) is provided so as to correspond to a whole circumference of the fixing ring (33) in a circumferential direction of the fixing ring (33).

4. The induction heating roller (20) according to any one of claims 1 to 3, wherein the first magnetic member (46) is in contact with the inner circumferential surface (34b) of the heating target (34).

5. The induction heating roller (20) according to any one of claims 1 to 4, wherein the first magnetic member (46) is in contact with the heat equalizing member (41).

6. The induction heating roller (20) according to any one of claims 1 to 5, wherein there is a gap between the first magnetic member (46) and the fixing ring (33) in the axial direction.

7. The induction heating roller (20) according to any one of claims 1 to 6,
wherein the first magnetic member (46) is
a pressing member (42) provided side by side on the first side of the heat equalizing member (41) in the axial direction and configured to press the heat equalizing member (41); and
the heat equalizing unit (32) further comprises a biasing member (43) provided between the pressing member (42) and the fixing ring (33) in the axial direction and configured to bias the pressing member (42) toward the second side in the axial direction.

8. The induction heating roller (20) according to any one of claims 1 to 7, wherein the heater (50) includes a second magnetic member (54) provided radially outward of the coil (52), the second magnetic member (54) being provided so as to be opposed to the first magnetic member (46) in the radial direction.

9. The induction heating roller (20) according to claim 8, wherein the second magnetic member (54) is structured by a plurality of parts arranged in the circumferential direction of the fixing ring (33).

10. The induction heating roller (20) according to claim 8 or 9,
wherein the heater (50) includes a third magnetic member provided adjacent to an end portion of the coil (52) on the first side in the axial direction, the third magnetic member extending further radially outward relative to the coil (52), and
wherein the second magnetic member (54) is provided in contact with the third magnetic member.

11. The induction heating roller (20) according to any one of claims 1 to 10, wherein the fixing ring (33) has a relative permeability lower than that of the first magnetic member (46).

12. An induction heating roller (60) comprising:
a rotatable roller unit (70); and
a heater (80) including a coil (52) provided radially inward of the roller unit (70),
wherein the roller unit (70) comprises:
a roller main body (31) including a cylindrical heating target (34) configured to be heated by induction heating due to magnetic flux passing in an axial direction of the roller unit (70), the magnetic flux being generated by electric current flowing through the coil (52);
a heat equalizing unit (32) including a heat equalizing member (41) which is in contact with an inner circumferential surface (34b) of the heating target (34), the heat equalizing member (41) extending in the axial direction and having a heat conductivity higher at least than that of the inner circumferential surface (34b) of the heating target (34); and **characterized in that** the induction heating roller comprises
a fixing ring (72) provided so as to be in contact with a first-side end portion of the heating target (34) which is on a first side in the axial direction and with a first-side end portion of the heat equalizing unit (32) which is on the first side in the axial direction, the fixing ring (72) fixing the roller main body (31) and the heat equalizing unit (32) to each other, and
**in that** the fixing ring (72) comprises a high resistive portion (74) provided at a part of the fixing ring (72) with respect to its circumferential direction and configured to decrease eddy currents flowing in the circumferential direction.

13. The induction heating roller (60) according to claim 12, wherein the high resistive portion (74) has a cross-sectional area, which is orthogonal to the circumferential direction, smaller than that of a portion of the fixing ring (72) other than the high resistive portion (74).

14. The induction heating roller (60) according to claim 13, wherein the high resistive portion (74) has a hole to make the cross-sectional area of the high resistive portion (74) smaller than that of the portion other than the high resistive portion (74).

15. The induction heating roller (60) according to claim 14, wherein the hole is filled with an insulator.

16. The induction heating roller (60) according to claim 12,
wherein the fixing ring (72) includes a plurality of ring pieces which are separable in the circumferential direction,
wherein the ring pieces are connected to each other via insulators, and
wherein portions of the fixing ring (72) in which the insulators are respectively provided in the circumferential direction function as the high resistive portion (74).

17. The induction heating roller (20, 60) according to any one of claims 1 to 16,
wherein the roller main body (31) is supported in a cantilever manner, and
wherein the fixing ring (72) is provided, in the axial direction, at a base end portion of the heating target (34), which is the first-side end portion of the heating target (34).

18. A spun yarn drawing device comprising the induction heating roller (20, 60) recited in any one of claims 1 to 17,
wherein a plurality of yarns are wound onto an outer circumferential surface of the induction heating roller (20, 60) in a lined-up manner in the axial direction.

## Patentansprüche

1. Induktionsheizwalze (20), umfassend:
eine drehbare Walzeneinheit (30); und
ein Heizelement (50) einschließlich einer Spule (52), die radial innerhalb der Walzeneinheit (30) vorgesehen ist,
die Walzeneinheit (30) umfassend:
einen Walzenhauptkörper (31) einschließlich einem zylindrischen Heizziel (34), das so konfiguriert ist, um durch Induktionserwärmung aufgrund eines magnetischen Flusses, der in einer axialen Richtung der Walzeneinheit (30) verläuft, zu erwärmen, wobei der magnetische Fluss durch elektrischen Strom erzeugt wird, der durch die Spule (52) fließt;
eine Wärmeausgleichseinheit (32) einschließlich einem Wärmeausgleichselement (41), das in Kontakt mit einer inneren Umfangsfläche (34b) des Heizziels (34) steht, wobei sich das Wärmeausgleichselement (41) in der axialen Richtung erstreckt und eine Wärmeleitfähigkeit aufweist, die zumindest höher ist als die der inneren Umfangsfläche (34b) des Heizziels (34); **gekennzeichnet durch**
einen Befestigungsring (33), der so vorgesehen ist, dass er mit einem erstseitigen Endabschnitt des Heizziels (34), der sich auf einer ersten Seite in der axialen Richtung befindet, und mit einem erstseitigen Endabschnitt der Wärmeausgleichseinheit (32), der sich auf der ersten Seite in der axialen Richtung befindet, in Kontakt ist, wobei der Befestigungsring (33) den Walzenhauptkörper (31) und die Wärmeausgleichseinheit (32) aneinander befestigt; und
durch ein erstes magnetisches Element (46), das zwischen dem Heizziel (34) und der Spule (52) in der radialen Richtung vorgesehen ist, wobei das erste magnetische Element (46) auf der ersten Seite relativ zu einem Zentrum des Heizziels (34) in der axialen Richtung und auf einer zweiten Seite gegenüber der ersten Seite relativ zu dem Befestigungsring (33) in der axialen Richtung vorgesehen ist.

2. Induktionsheizwalze (20) nach Anspruch 1, wobei das Wärmeausgleichselement (41) eine geringere relative Durchlässigkeit als der Befestigungsring (33) aufweist.

3. Induktionsheizwalze (20) nach Anspruch 1 oder 2, wobei das erste magnetische Element (46) so vorgesehen ist, dass es einem ganzen Umfang des Befestigungsrings (33) in einer Umfangsrichtung des Befestigungsrings (33) entspricht.

4. Induktionsheizwalze (20) nach einem der Ansprüche 1 bis 3, wobei das erste magnetische Element (46) in Kontakt mit der inneren Umfangsfläche (34b) des Heizziels (34) ist.

5. Induktionsheizwalze (20) nach einem der Ansprüche 1 bis 4, wobei das erste magnetische Element (46) in Kontakt mit dem Wärmeausgleichselement (41) steht.

6. Induktionsheizwalze (20) nach einem der Ansprüche 1 bis 5, wobei zwischen dem ersten magnetischen Element (46) und dem Befestigungsring (33) in axialer Richtung ein Spalt vorhanden ist.

7. Induktionsheizwalze (20) nach einem der Ansprüche 1 bis 6,
wobei das erste magnetische Element (46)
ein Druckelement (42), das Seite an Seite auf der ersten Seite des Wärmeausgleichselements (41) in der axialen Richtung vorgesehen und konfiguriert ist, um das Wärmeausgleichselement (41) zu drücken; und
die Wärmeausgleichseinheit (32) weiter ein Vorspannelement (43) umfasst, das zwischen dem Druckelement (42) und dem Befestigungsring (33) in der axialen Richtung vorgesehen und konfiguriert ist, um das Druckelement (42) in der axialen Richtung in Richtung der zweiten Seite vorzuspannen.

8. Induktionsheizwalze (20) nach einem der Ansprüche 1 bis 7, wobei das Heizelement (50) ein zweites magnetisches Element (54) einschließt, das radial außerhalb der Spule (52) vorgesehen ist, wobei das zweite magnetische Element (54) so vorgesehen ist, dass es dem ersten magnetischen Element (46) in radialer Richtung gegenüberliegt.

9. Induktionsheizwalze (20) nach Anspruch 8, wobei das zweite magnetische Element (54) durch eine Vielzahl von Teilen strukturiert ist, die in der Umfangsrichtung des Befestigungsrings (33) angeordnet sind.

10. Induktionsheizwalze (20) nach Anspruch 8 oder 9,
wobei das Heizelement (50) ein drittes magnetisches Element einschließt, das benachbart zu einem Endabschnitt der Spule (52) auf der ersten Seite in der axialen Richtung vorgesehen ist, wobei sich das dritte magnetische Element weiter radial nach außen relativ zu der Spule (52) erstreckt, und
wobei das zweite magnetische Element (54) in Kontakt mit dem dritten magnetischen Element vorgesehen ist.

11. Induktionsheizwalze (20) nach einem der Ansprüche 1 bis 10, wobei der Befestigungsring (33) eine relative Permeabilität aufweist, die geringer ist als die des ersten magnetischen Elements (46).

12. Induktionsheizwalze (60), umfassend:
eine drehbare Walzeneinheit (70); und
ein Heizelement (80) einschließlich einer Spule (52), die radial innerhalb der Walzeneinheit (70) vorgesehen ist,
wobei die Walzeneinheit (70) umfasst:
einen Walzenhauptkörper (31) einschließlich einem zylindrischen Heizziel (34), das konfiguriert ist, um durch Induktionserwärmung aufgrund eines magnetischen Flusses, der in einer axialen Richtung der Walzeneinheit (70) verläuft, erwärmt zu werden, wobei der magnetische Fluss durch elektrischen Strom erzeugt wird, der durch die Spule (52) fließt;
eine Wärmeausgleichseinheit (32) einschließlich einem Wärmeausgleichselement (41), das in Kontakt mit einer inneren Umfangsfläche (34b) des Heizziels (34) steht, wobei sich das Wärmeausgleichselement (41) in der axialen Richtung erstreckt und eine Wärmeleitfähigkeit aufweist, die zumindest höher ist als die der inneren Umfangsfläche (34b) des Heizziels (34); und **dadurch gekennzeichnet, dass** die Induktionsheizwalze
einen Befestigungsring (72) umfasst, der so vorgesehen ist, dass er mit einem erstseitigen Endabschnitt des Heizziels (34), der sich auf einer ersten Seite in der axialen Richtung befindet, und mit einem erstseitigen Endabschnitt der Wärmeausgleichseinheit (32), der sich auf der ersten Seite in der axialen Richtung befindet, in Kontakt ist, wobei der Befestigungsring (72) den Walzenhauptkörper (31) und die Wärmeausgleichseinheit (32) aneinander befestigt, und
dass der Befestigungsring (72) einen hochohmigen Abschnitt (74) umfasst, der an einem Teil des Befestigungsrings (72) in Bezug auf seine Umfangsrichtung vorgesehen und so konfiguriert ist, dass er Wirbelströme, die in der Umfangsrichtung fließen, verringert.

13. Induktionsheizwalze (60) nach Anspruch 12, wobei der hochohmige Abschnitt (74) eine Querschnittsfläche aufweist, die orthogonal zur Umfangsrichtung ist und kleiner ist als die eines anderen Abschnitts des Befestigungsrings (72), der nicht der hochohmige Abschnitt (74) ist.

14. Induktionsheizwalze (60) nach Anspruch 13, wobei der hochohmige Abschnitt (74) ein Loch aufweist, um die Querschnittsfläche des hochohmigen Abschnitts (74) kleiner zu machen als die des Abschnitts, der nicht der hochohmige Abschnitt (74) ist.

15. Induktionsheizwalze (60) nach Anspruch 14, wobei das Loch mit einem Isolator gefüllt ist.

16. Induktionsheizwalze (60) nach Anspruch 12,
wobei der Befestigungsring (72) eine Vielzahl von Ringstücken einschließt, die in Umfangsrichtung trennbar sind,
wobei die Ringstücke über Isolatoren miteinander verbunden sind, und
wobei Abschnitte des Befestigungsrings (72), in denen die Isolatoren jeweils in der Umfangsrichtung vorgesehen sind, als der hochohmige Abschnitt (74) fungieren.

17. Induktionsheizwalze (20, 60) nach einem der Ansprüche 1 bis 16,
wobei der Walzenhauptkörper (31) freitragend gelagert ist, und
wobei der Befestigungsring (72) in der axialen Richtung an einem Basisendabschnitt des Heizziels (34) vorgesehen ist, der der erstseitige Endabschnitt des Heizziels (34) ist.

18. Spinnfadenstreckvorrichtung, umfassend die in einem der Ansprüche 1 bis 17 genannte Induktionsheizwalze (20, 60),
wobei eine Vielzahl von Fäden auf eine äußere Umfangsfläche der Induktionsheizwalze (20, 60) in axialer Richtung aufgereiht aufgewickelt wird.

## Revendications

1. Rouleau chauffant par induction (20) comprenant :
une unité (30) à rouleau rotatif ; et
un dispositif de chauffage (50) incluant une bobine (52) disposée radialement vers l'intérieur de l'unité (30) à rouleau, l'unité (30) à rouleau comprenant :
un corps principal (31) de rouleau incluant une cible de chauffage cylindrique (34) configurée pour être chauffée par chauffage par induction en raison du passage d'un flux magnétique dans une direction axiale de l'unité (30) à rouleau, le flux magnétique étant généré par un courant électrique circulant à travers la bobine (52) ;
une unité d'égalisation thermique (32) incluant un élément d'égalisation thermique (41) qui est en contact avec une surface circonférentielle interne (34b) de la cible de chauffage (34), l'élément d'égalisation thermique (41) s'étendant dans la direction axiale et présentant une conductivité thermique supérieure au moins à celle de la surface circonférentielle interne (34b) de la cible de chauffage (34) ; **caractérisé par**
une bague de fixation (33) disposée de façon à être en contact avec une partie d'extrémité de premier côté de la cible de chauffage (34) qui est sur un premier côté dans la direction axiale et avec une partie d'extrémité de premier côté de l'unité d'égalisation thermique (32) qui est sur le premier côté dans la direction axiale, la bague de fixation (33) fixant le corps principal (31) de rouleau et l'unité d'égalisation thermique (32) l'un à l'autre ; et
par un premier élément magnétique (46) disposé entre la cible de chauffage (34) et la bobine (52) dans la direction radiale, le premier élément magnétique (46) étant disposé sur le premier côté par rapport à un centre de la cible de chauffage (34) dans la direction axiale et sur un deuxième côté opposé au premier côté par rapport à la bague de fixation (33) dans la direction axiale.

2. Rouleau chauffant par induction (20) selon la revendication 1, dans lequel l'élément d'égalisation thermique (41) présente une perméabilité relative inférieure à celle de la bague de fixation (33).

3. Rouleau chauffant par induction (20) selon la revendication 1 ou la revendication 2, dans lequel le premier élément magnétique (46) est disposé de façon à correspondre à une circonférence entière de la bague de fixation (33) dans une direction circonférentielle de la bague de fixation (33).

4. Rouleau chauffant par induction (20) selon l'une quelconque des revendications 1 à 3, dans lequel le premier élément magnétique (46) est en contact avec la surface circonférentielle interne (34b) de la cible de chauffage (34).

5. Rouleau chauffant par induction (20) selon l'une quelconque des revendications 1 à 4, dans lequel le premier élément magnétique (46) est en contact avec l'élément d'égalisation thermique (41).

6. Rouleau chauffant par induction (20) selon l'une quelconque des revendications 1 à 5, dans lequel il y a un espace entre le premier élément magnétique (46) et la bague de fixation (33) dans la direction axiale.

7. Rouleau chauffant par induction (20) selon l'une quelconque des revendications 1 à 6,
dans lequel le premier élément magnétique (46) est
un élément de pressage (42) disposé côte à côte sur le premier côté de l'élément d'égalisation thermique (41) dans la direction axiale et configuré pour presser l'élément d'égalisation thermique (41) ; et
l'unité d'égalisation thermique (32) comprend en outre un élément de sollicitation (43) disposé entre l'élément de pressage (42) et la bague de fixation (33) dans la direction axiale et configuré pour solliciter l'élément de pressage (42) vers le deuxième côté dans la direction axiale.

8. Rouleau chauffant par induction (20) selon l'une quelconque des revendications 1 à 7, dans lequel le dispositif de chauffage (50) inclut un deuxième élément magnétique (54) disposé radialement vers l'extérieur de la bobine (52), le deuxième élément magnétique (54) étant disposé de façon à être opposé au premier élément magnétique (46) dans la direction radiale.

9. Rouleau chauffant par induction (20) selon la revendication 8, dans lequel le deuxième élément magnétique (54) est structuré par une pluralité de parties agencées dans la direction circonférentielle de la bague de fixation (33).

10. Rouleau chauffant par induction (20) selon la revendication 8 ou la revendication 9,
dans lequel le dispositif de chauffage (50) inclut un troisième élément magnétique disposé adjacent à une partie d'extrémité de la bobine (52) sur le premier côté dans la direction axiale, le troisième élément magnétique s'étendant davantage radialement vers l'extérieur par rapport à la bobine (52), et
dans lequel le deuxième élément magnétique (54) est disposé en contact avec le troisième élément magnétique.

11. Rouleau chauffant par induction (20) selon l'une quelconque des revendications 1 à 10, dans lequel la bague de fixation (33) présente une perméabilité relative inférieure à celle du premier élément magnétique (46).

12. Rouleau chauffant par induction (60) comprenant :
une unité (70) à rouleau rotatif ; et
un dispositif de chauffage (80) incluant une bobine (52) disposée radialement vers l'intérieur de l'unité (70) à rouleau,
dans lequel l'unité (70) à rouleau comprend :
un corps principal (31) de rouleau incluant une cible de chauffage cylindrique (34) configurée pour être chauffée par chauffage par induction en raison du passage d'un flux magnétique dans une direction axiale de l'unité (70) à rouleau, le flux magnétique étant généré par un courant électrique circulant à travers la bobine (52) ;
une unité d'égalisation thermique (32) incluant un élément d'égalisation thermique (41) qui est en contact avec une surface circonférentielle interne (34b) de la cible de chauffage (34), l'élément d'égalisation thermique (41) s'étendant dans la direction axiale et présentant une conductivité thermique supérieure au moins à celle de la surface circonférentielle interne (34b) de la cible de chauffage (34) ; et **caractérisé en ce que** le rouleau chauffant par induction comprend
une bague de fixation (72) disposée de façon à être en contact avec une partie d'extrémité de premier côté de la cible de chauffage (34) qui est sur un premier côté dans la direction axiale et avec une partie d'extrémité de premier côté de l'unité d'égalisation thermique (32) qui est sur le premier côté dans la direction axiale, la bague de fixation (72) fixant le corps principal (31) de rouleau et l'unité d'égalisation thermique (32) l'un à l'autre, et
**en ce que** la bague de fixation (72) comprend une partie hautement résistive (74) disposée au niveau d'une partie de la bague de fixation (72) par rapport à sa direction circonférentielle et configurée pour diminuer des courants de Foucault circulant dans la direction circonférentielle.

13. Rouleau chauffant par induction (60) selon la revendication 12, dans lequel la partie hautement résistive (74) présente une zone de section transversale, qui est orthogonale à la direction circonférentielle, plus petite que celle d'une partie de la bague de fixation (72) autre que la partie hautement résistive (74).

14. Rouleau chauffant par induction (60) selon la revendication 13, dans lequel la partie hautement résistive (74) présente un trou pour faire en sorte que la zone de section transversale de la partie hautement résistive (74) soit plus petite que celle de la partie autre que la partie hautement résistive (74).

15. Rouleau chauffant par induction (60) selon la revendication 14, dans lequel le trou est rempli d'un isolant.

16. Rouleau chauffant par induction (60) selon la revendication 12,
dans lequel la bague de fixation (72) inclut une pluralité de pièces annulaires qui peuvent être séparées dans la direction circonférentielle,
dans lequel les pièces annulaires sont reliées entre elles par des isolants, et
dans lequel des parties de la bague de fixation (72) dans lesquelles les isolants sont respectivement disposés dans la direction circonférentielle fonctionnent comme la partie hautement résistive (74).

17. Rouleau chauffant par induction (20, 60) selon l'une quelconque des revendications 1 à 16,
dans lequel le corps principal (31) de rouleau est supporté en porte-à-faux, et
dans lequel la bague de fixation (72) est disposée, dans la direction axiale, au niveau d'une partie d'extrémité de base de la cible de chauffage (34), qui est la partie d'extrémité de premier côté de la cible de chauffage (34).

18. Dispositif d'étirage de filé comprenant le rouleau chauffant par induction (20, 60) selon l'une quelconque des revendications 1 à 17,
dans lequel une pluralité de fils sont enroulés sur une surface circonférentielle externe du rouleau chauffant par induction (20, 60) de manière alignée dans la direction axiale.
